# EUROPEAN PATENT SPECIFICATION

(11) **EP 2 564 395 B1**
(45) Date of publication and mention of the grant of the patent: **23.10.2019**
(21) Application number: 11775381.4
(22) Date of filing: 28.04.2011
(51) Int. Cl.: G21F 9/06, B01D 21/24, C02F 11/20, G21F 9/20

(54) **METHOD AND DEVICE FOR SLUDGE HANDLING**
VERFAHREN UND VORRICHTUNG ZUR SCHLAMMVERARBEITUNG
PROCÉDÉ ET DISPOSITIF POUR LE TRAITEMENT DES BOUES

(30) Priority: 30.04.2010 SE 1050430
(43) Date of publication of application: 06.03.2013
(73) Proprietor: STUDSVIK AB, 611 82 Nyköping (SE)
(72) Inventor: ROSTMARK, Mats-Johan, SE-117 58 Stockholm (SE); MAKSIMAINEN, Erik, SE-97596 Luleå (SE); ROSTMARK, Susanne, S-981 34 Kiruna (SE)
(74) Representative: Jackson, Richard Eric
(86) International application number: PCT/SE2011/050524
(87) International publication number: WO 2011/136732

(56) References cited:
- WO-A1-2006/098686
- DE-A1- 2 022 366
- DE-A1- 3 239 326
- GB-A- 674 938
- GB-A- 1 459 175
- GB-A- 2 166 658
- GB-A- 2 275 468
- JP-A- 50 002 354
- US-A1- 2003 147 725
- US-A1- 2007 205 164
- US-B1- 6 649 055

## Description

### Technical field

The present invention relates to a method and a device for sludge handling. More specifically the present invention relates to a method and a device for handling of radioactive sludge which has sedimentated on a surface. In particular the invention relates to such sludge that has sedimentated on the bottom of a basin for storage of nuclear fuel.

### Description of the prior art

Nuclear power plants use nuclear fuel to produce electric energy. The nuclear fuel is usually in the form of fuel pellets that are enclosed by fuel claddings to form fuel rods. A number of fuel rods are arranged in a fuel element. A number of fuel elements form a reactor core. The reactor core is arranged in a reactor tank. In most reactors the reactor tank is filled with water that encloses the reactor core and which water is to be heated by the reactor core to form steam. The steam drives turbines that in turn drive generators. The nuclear fuel has to be replaced regularly. The used fuel rods that have been removed from the reactor core are moved to a water filled basin in order to cool off. After cooling off the fuel rods are arranged in another water filled basin awaiting transportation to end storage. Small amounts of particles are discharged from at least some of the fuel rods. The particles may consist of nuclear fuel that has escaped from the fuel rods through cracks in the fuel rods. The particles may also consist of particles from the fuel claddings or other parts of the nuclear reactor with which the water comes in contact during operation of the nuclear reactor.

Over time the particles that are released from the fuel rods sediment as sludge on the bottom surface of the storage basin. In addition to the fine particles there may also be larger objects on the bottom of the basin such as, e.g., different tools that have accidently been dropped into the basin.

As the sludge at least to some extent is radioactive it has to be treated as nuclear waste. This put numerous restrictions on the handling of the sludge. Today the sludge is collected by using a machine that sucks up water through a pipe. The machine is used to suck up water from the bottom, whereby the sludge at the bottom is sucked up together with the water. The water and sludge that is sucked up in this way is transferred to a tank in which the sludge is allowed to sediment on the bottom. Then the sludge on the bottom is stabilised by adding some material such as cement. The sludge is the enclosed in a copper capsule for end storage deep into the ground.

A drawback with using the described method is that the sucking of sludge from the bottom stirs up the sludge. Thus, particles that have been stirred up from the bottom will sediment again on the bottom. Another drawback is that the suction of sludge from the bottom also will bring a lot of water into the tank into which the sludge is sucked. This means that the tank will fill rapidly allowing only a small portion of the bottom to be cleaned. Furthermore, the time for the particles to sediment on the bottom of the tank is on the order of several days. This increases the time before the tank may be reused for a repeated suction of sludge from the bottom of the tank.

US Patent 5,055,237 describes a method of compacting low-level radioactive waste utilizing freezing and electrodialysing concentration processes. The process described may be used to compact the waste that has been sucked up into the tank. The method described is, however, complicated and requires a lot of equipment. Furthermore, the problem of stirring up sludge from the bottom of the tank during suction of sludge from the bottom still remains.

WO2006/098686 A relates to a system and a method for automated freeze dredging of sediment.

### Summary of the invention

An object of the present invention is to provide a method and a device for collecting radioactive sludge from the bottom of a basin which at least alleviates one of the problems of the prior art.

Another object of the present invention is to provide a method and a device for compacting radioactive sludge, which are more efficient than methods and devices according to the prior art.

A further object of the present invention is to provide a method and a device for collecting radioactive sludge from the bottom of a basin which is faster than methods according to the prior art.

At least one of these objects is fulfilled with a method and a device according to the independent claims.

Further advantages of the invention are achieved with the features of the following dependent claims.

According to a first aspect of the present invention a method is provided for handling sludge arranged on the bottom of a water filled basin, wherein the water defines a surface. The method is characterised in that it comprises the steps of freezing the sludge in a portion of the bottom of the basin, and arranging a closable container in the basin below the surface of the water, which container comprises a collecting filter. The method also comprises the steps of moving the frozen sludge into the container to a position above the collecting filter, closing the container, and thawing the frozen sludge in the container.

When the sludge is thawed the particles are prone to form larger aggregates which sediment more easily. Furthermore, the sludge is confined in a container which means that it is easier to transport to a storage container compared with the direct transport of sludge from the bottom of the basin.

The freezing of the sludge may comprise the steps of arranging a freezing device, having a coolable essentially flat surface, with the flat surface at a distance from the bottom of the water filled basin essentially above the top surface of the sludge, cooling the coolable surface of the freezing device to a temperature being sufficiently low for the sludge to freeze, and maintaining the low temperature for a sufficiently long period of time for essentially all the sludge between the freezing device and the bottom to freeze. This freezing technique is in itself well known in the art. When applied to the problem of collecting radioactive sludge it presents the advantage that the stirring up of sludge from the bottom of the basin, which occur when applying traditional methods, may be avoided.

The step of moving the frozen sludge into the container may comprise the steps of after freezing of the sludge, moving the freezing device from the bottom of the basin to the container, and releasing the frozen sludge from the freezing device into the container. Alternatively, the freezing device may also be in the container during thawing of the sludge. It is, however, less complicated to release the frozen sludge into the container.

The coolable surface of the freezing device may be a coolable/heatable surface that is also arranged to be heatable, and wherein the releasing of the sludge from the freezing device comprises the step of heating the coolable/heatable surface. This is advantageous in that the frozen sludge in this way may be released within a short period of time from entering the container.

The container is preferably arranged with means for heating the walls, and wherein the thawing of the frozen sludge comprises the step of heating the walls of the container. This provides for a rapid thawing of the frozen sludge. Alternatively, in case the freezing device is in the container during thawing the freezing device may be used to heat the sludge.

Preferably, essentially all the water is removed from the container before thawing of the frozen sludge. This provides for a high concentration of particles in the container after thawing of the sludge. This means that the particles may be removed from the container more easily. The water is preferably removed primarily from the bottom of the container.

In case that water is not removed from the container before thawing of the frozen sludge, the sludge still sediment on the particle filter. However, the handling of the sediment sludge is more complex in this case due to the water still remaining in the container.

In order to further decrease the water content in the thawed sludge water may be removed during thawing of the sludge in order to maintain an essentially dry environment in the container.

It is also possible to let dry air circulate through the container during thawing of the sludge. To decrease the water content of the thawed sludge further.

The frozen sludge may be arranged on the collecting filter. The sludge is in the form of slabs. Depending on the thickness of the slabs and the size of the container a number of slabs may be arranged on top of each other in the container.

The collecting filter may comprise a grid arranged for the collection of larger objects and a particle filter arranged below the grid for the collection of small particles. Examples of larger objects that may be present in the sludge are tools, screws and similar objects that have been accidentally dropped into the basin by personnel working at the basin.

According to a second aspect of the present invention an apparatus for handling sludge is provided. The apparatus comprises a container with an opening and a lid to be arranged in the opening for closing the container. The apparatus is characterised in that it comprises at least one movable freezing device for freezing sludge arranged on the bottom of a water filled basin, which freezing device has a coolable surface, and in that the container is arranged to be placed on the bottom of the water filled basin and comprises a collecting filter for receiving frozen sludge and means for thawing the frozen sludge in the container.

An apparatus according to the second aspect of the present invention is suitable for performing the method according to the invention. The apparatus may comprise a plurality of containers and a plurality of freezing devices.

The collecting filter for receiving frozen sludge may be a grid arranged in the container. As described above the collecting filter is suitable for collecting at least larger objects.

The container may comprise an outlet arranged to drain water from the container. Additionally the container may comprise an air inlet/outlet for the inlet/outlet of air from the container. These features provide for sludge with a smaller water content.

The apparatus may comprise heating elements in the interior walls of the container for thawing of the frozen sludge and may also comprise a control unit for the control of the heating elements in the interior walls of the container. The control unit may be a computer arranged outside the basin.

The collecting filter may comprise a grid arranged for the collection of larger objects and a particle filter arranged below the grid for the collection of small particles in the sludge.

### Short description of the drawings

In the following preferred embodiments of the invention will be described with reference to the appended drawings on, which
Fig 1 is a schematic view of a basin on the bottom of which a device according to the present invention for handling sludge is arranged.
Fig 2 is a schematic view of the device for handling sludge in more detail.
Fig 3 is a flow diagram of a method according to the present invention for handling sludge.

### Description of preferred embodiments of the invention

In the following description of preferred embodiments similar features in the different figures will be denoted with the same reference numeral. The drawings are only schematic and not drawn to scale.

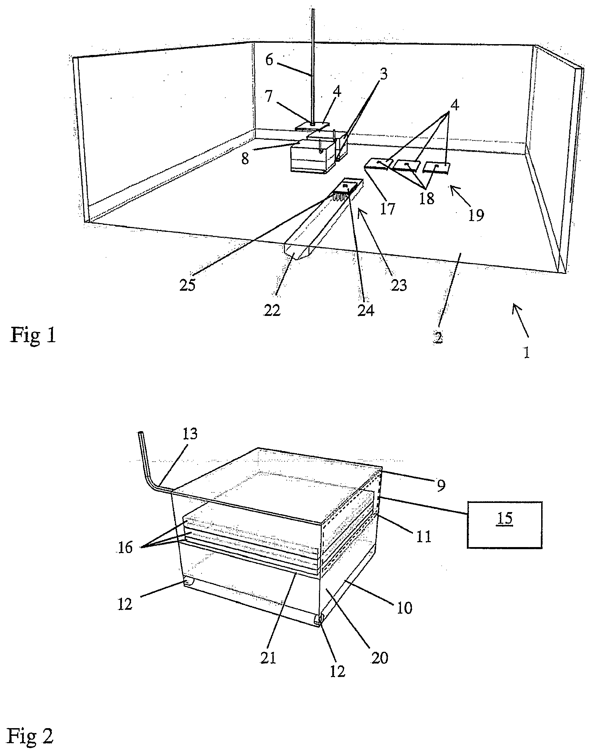

Fig 1 is a schematic view of a basin 1 on the bottom 2 of which an apparatus according to the present invention for handling sludge are arranged. The apparatuses comprise two containers 3 arranged on the bottom of the basin and arranged with means for receiving frozen sludge. The apparatus also comprise four movable freezing devices 4 for freezing sludge, which device has a coolable essentially flat surface. The coolable surface 19 of the freezing device is a coolable/heatable surface that is also arranged to be heatable. Such coolable/heatable surfaces are well known in the art and will not be described in detail herein.

Three of the freezing devices 4 are arranged on the bottom 2 of the basin arranged to freeze the sludge beneath the freezing devices. The freezing devices 4 comprise one or more lifting eyes 5 for the application of one or more grip devices 7 to lift the freezing devices. One of the freezing devices 4 is shown during transfer from the bottom 2 to one of the containers 3. The freezing device 4 is lifted by a crane (not shown) by means of a rod 6 or similar and a grip device 7 which is connected to the lifting eye 18 of the freezing device. The container 3 into which the frozen sludge is to be introduced into the container 3, comprises an opening 8.

Also shown in Fig 1 is a trench 22. Sludge that has sedimentated in the trench 22 may not be collected using the freezing devices 4. A freezing device 23 according to a second embodiment of the present invention is shown arranged in the trench 22. The freezing device 23 according to this second embodiment of the invention comprises a plate formed part 24 and a number of cooling rods 25 extending perpendicular from the plate formed part 24. With a cooling device according to this second embodiment the sludge in the trench may be frozen.

Fig 2 is a schematic view of the device for handling sludge in more detail. The container comprises a lid 9 arranged in the opening 8 for closing the container 3. The container 3 comprises a collecting filter for receiving the frozen sludge which collecting filter comprises a grid 21. The container 3 also comprises a particle filter 10 arranged in the container below the grid 21 for collecting particles in the sludge. The container 3 also comprises means for thawing the frozen sludge in the form of heating elements 11 arranged in the walls 20 of the container 3. The container 3 comprises two outlets 12 arranged to drain water from the bottom of the container 3. An air inlet/outlet 13 for the inlet/outlet of air from the container 3 is arranged at the top of the container 3. A control unit 15 is arranged connected to the heating elements for the control of the heating elements. A number of slabs 16 of frozen sludge have been arranged on top of each other in Fig 2. The slabs may be thawed at the same time. The walls 20 of the container are preferably that attenuates the gamma radiation and which is impermeable to Alfa and Beta radiation.

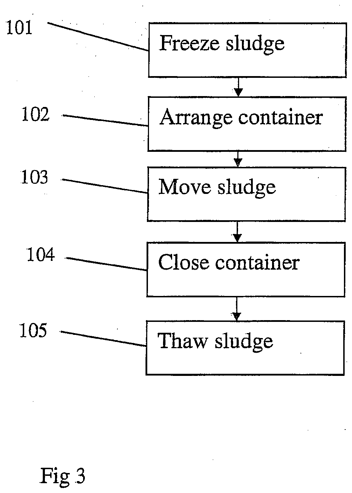

Fig 3 is a flow diagram of a method according to the present invention for handling sludge. In a first step 101, the sludge in a portion of the bottom of the basin is frozen. In step 102 a closable container is arranged in the basin below the surface of the water, which container comprises a collecting filter. In step 103 the frozen sludge is moved into the container to a position above the collecting filter. In step 104 the container is closed, and in step 105 the frozen sludge in the container 3 is thawed.

More precisely the step of freezing the sludge comprises the step of arranging a freezing device 4, having a coolable essentially flat surface, with the flat surface at a distance from the bottom 2 of the water filled basin 1 essentially above the top surface of the sludge (not shown). The top surface of the sludge is not a well defined surface due to the nature of the sludge. After arrangement of the freezing device in the desired position the coolable surface of the freezing device 4 is cooled to a temperature being sufficiently low for the sludge to freeze, and the low temperature is maintained for a sufficiently long period of time for essentially all the sludge between the freezing device 4 and the bottom 2 to freeze.

A distance between the freezing device 4 and the bottom 2 may be maintained in many ways. In Fig 1 the freezing devices are shown with short legs 17, which are arranged to provide a space between the freezing device 4 and the bottom 2 of the basin. After freezing of the sludge, the freezing device is moved from the bottom of the basin to the container, with a crane (not shown) by means of a rod 6 or similar and a grip device 7 which is connected to the lifting eye 18 of the freezing device 4, and is released into the container. The release of the sludge from the freezing device comprises the step of heating the coolable/heatable surface. After arranging the desired number of slabs of frozen sludge the container is closed using the lid 9. The water is then evacuated from the container 3 through the outlets 12. Dry air is provided into the container 3 through the air inlet/outlet 13. After removal of essentially all the water from the container thawing of the frozen slabs of sludge is commenced by heating the heating elements 11 of the container. The water is continuously removed during thawing of the sludge in order to maintain an essentially dry environment in the container, while dry air is provided through the air inlet/outlet during thawing of the sludge.

During thawing the frozen slabs of sludge will begin to fall apart and will fall through the grid 21 onto the particle filter. However, larger objects such as, e.g., tools, which may have been dropped into the basin 1, will remain on the grid 21. The water will flow through the particle filter while the particles will remain on the particle filter. After complete thawing of the frozen sludge the particles on the particle filter may be taken care of in any appropriate way.

The above described embodiments of the invention may be amended in many ways without departing from the present invention, which is limited only by the appended claims.

It is not necessary to keep the container below the surface of the water during thawing of the sludge in case the container attenuates the gamma radiation from the sludge.

The steps described above may be performed in another order.

It is possible to lift the container out of the water after the lid 9 has been closed in case the container provides a sufficient protection against radiation.

It is possible to design the freezing device in other ways than what has been described above. The coolable surface of the freezing device may have any suitable form for freezing the sludge on the bottom of the basin.

## Claims

1. Method for handling sludge arranged on the bottom (2) of a water filled basin (1), the water defining a surface, **characterised in that** it comprises the steps of
freezing the sludge in a portion of the bottom (2) of the basin (1),
arranging a closable container (3) in the basin (1) below the surface of the water, which container (3) comprises a collecting filter,
moving the frozen sludge into the container (3) to a position above the collecting filter,
closing the container (3), and
thawing the frozen sludge in the container (3).

2. Method according to claim 1, which wherein the freezing of the sludge comprises the steps of
arranging a freezing device (4), having a coolable essentially flat surface (19), with the flat surface (19) at a distance from the bottom (2) of the water-filled basin (1) essentially above the top surface of the sludge,
cooling the coolable surface (19) of the freezing device (4) to a temperature being sufficiently low for the sludge to freeze, and
maintaining the low temperature for a sufficiently long period of time for essentially all the sludge between the freezing device (4) and the bottom (2) to freeze.

3. Method according to claim 2, wherein the step of moving the frozen sludge into the container (3) comprises the steps of
after freezing of the sludge, moving the freezing device (4) from the bottom of the basin (1) to the container (3),
and releasing the frozen sludge from the freezing device (4) into the container (3).

4. Method according to claim 3, wherein the coolable surface (19) of the freezing device (4) is a coolable/heatable surface (19) that is also arranged to be heatable, and wherein the releasing of the sludge from the freezing device (4) comprises the step of heating the coolable/heatable surface (19).

5. Method according to any one of the preceding claims; wherein the container (3) is arranged with means for heating the walls (20), and wherein the thawing of the frozen sludge comprises the step of heating the walls (20) of the container (3).

6. Method according to any one of the preceding claims, comprising the step of removing essentially all the water from the container (3) before thawing of the frozen sludge.

7. Method according to claim 6, wherein the water is removed during thawing of the sludge in order to maintain an essentially dry environment in the container (3).

8. Method according-to claim 7, wherein dry air is circulated through the container (3) during thawing of the sludge.

9. Method according to any one of the preceding claims, wherein the frozen sludge is arranged on the collecting filter.

10. Apparatus for handling sludge, comprising a container (3) with an opening (8) and a lid (9) to be arranged in the opening (8) for closing the container (3), **characterised in that** it comprises at least one movable freezing device (4) for freezing sludge arranged on the bottom (2) of a water filled basin, which freezing device (4) has a coolable surface (19), and **in that** the container (3) is arranged to be placed on the bottom (2) of the water filled basin and comprises a collecting filter for receiving frozen sludge, and means for thawing the frozen sludge in the container.

11. Apparatus according to claim 10, wherein the means for receiving frozen sludge is a grid (21) arranged in the container (3).

12. Apparatus according to claim 10 or 11, wherein the container (3) comprises an outlet (12) arranged to drain water from the bottom of the container (3).

13. Apparatus according to any one of claims 10-12, comprising an air inlet/outlet (13) for the inlet/outlet of air from the container (3).

14. Apparatus according to any one of claims 10-13, comprising a control unit (15) for the control of heating elements (11) in the walls (20) of the container (3).

15. Apparatus according to any one of claims 10-14, wherein the coolable surface is essentially flat.

16. Apparatus according to any one of claims 10-15, wherein the collecting filter comprises a grid (21) arranged for the collection of larger objects and a particle filter (10) arranged below the grid (21) for the collection of small particles in the sludge.

## Patentansprüche

1. Verfahren zur Verarbeitung von Schlamm, der auf dem Boden (2) eines Beckens (1), das mit Wasser gefüllt ist, angeordnet ist, wobei das Wasser eine Oberfläche definiert, **dadurch gekennzeichnet, dass** es folgende Schritte aufweist
Gefrieren des Schlamms in einem Abschnitt des Bodens (2) des Beckens (1),
Anordnen eines verschließbaren Behälters (3) in dem Becken (1) unterhalb der Wasseroberfläche, wobei der Behälter (3) einen Auffangfilter aufweist,
Bewegen des gefrorenen Schlamms in den Behälter (3) zu einer Position über dem Auffangfilter,
Schließen des Behälters (3), und
Auftauen des gefrorenen Schlamms in dem Behälter (3) .

2. Verfahren nach Anspruch 1, wobei das Gefrieren des Schlamms folgende Schritte aufweist
Anordnen einer Gefriervorrichtung (4) mit einer kühlbaren, im Wesentlichen flachen Fläche (19), wobei die flache Fläche (19) in einem Abstand vom Boden (2) des Beckens (1), das mit Wasser gefüllt ist, im Wesentlichen über der Oberseite des Schlamms liegt,
Kühlen der kühlbaren Fläche (19) der Gefriervorrichtung (4) auf eine Temperatur, die niedrig genug ist, dass der Schlamm gefrieren kann, und
Aufrechterhalten der niedrigen Temperatur für eine Zeitspanne, die lang genug ist, dass im Wesentlichen der gesamte Schlamm zwischen der Gefriervorrichtung (4) und dem Boden (2) gefrieren kann.

3. Verfahren nach Anspruch 2, wobei der Schritt des Bewegens des gefrorenen Schlamms in den Behälter (3) folgende Schritte aufweist
nach dem Gefrieren des Schlamms, Bewegen der Gefriervorrichtung (4) vom Boden des Beckens (1) zum Behälter (3),
und Abgeben des gefrorenen Schlamms von der Gefriervorrichtung (4) in den Behälter (3).

4. Verfahren nach Anspruch 3, wobei die kühlbare Fläche (19) der Gefriervorrichtung (4) eine kühlbare/erwärmbare Fläche (19) ist, die auch dafür angeordnet ist, erwärmbar zu sein, und wobei das Freigeben des Schlamms von der Gefriervorrichtung (4) den Schritt des Erwärmens der kühlbaren/erwärmbaren Fläche (19) aufweist.

5. Verfahren nach einem der vorhergehenden Ansprüche, wobei der Behälter (3) mit Mitteln zum Erwärmen der Wände (20) ausgestattet ist, und wobei das Auftauen des gefrorenen Schlamms den Schritt des Erwärmens der Wände (20) des Behälters (3) aufweist.

6. Verfahren nach einem der vorhergehenden Ansprüche, das den Schritt des Entfernens im Wesentlichen des gesamten Wassers aus dem Behälter (3) vor dem Auftauen des gefrorenen Schlamms aufweist.

7. Verfahren nach Anspruch 6, wobei das Wasser während des Auftauens des Schlamms entfernt wird, um eine im Wesentlichen trockene Umgebung in dem Behälter (3) zu erhalten.

8. Verfahren nach Anspruch 7, wobei während des Auftauens des Schlamms Trockenluft durch den Behälter (3) zirkuliert wird.

9. Verfahren nach einem der vorhergehenden Ansprüche, wobei der gefrorene Schlamm auf dem Auffangfilter angeordnet ist.

10. Vorrichtung zur Schlammverarbeitung, die einen Behälter (3) mit einer Öffnung (8) und einem Deckel (9), der zum Schließen des Behälters (3) in der Öffnung (8) angeordnet wird, aufweist, **dadurch gekennzeichnet, dass** sie mindestens eine bewegliche Gefriervorrichtung (4) zum Gefrieren von Schlamm, der auf dem Boden (2) eines Beckens, das mit Wasser gefüllt ist, angeordnet ist, wobei die Gefriervorrichtung (4) eine kühlbare Fläche (19) aufweist, und dadurch, dass der Behälter (3) dafür angeordnet ist, auf dem Boden (2) des Beckens, das mit Wasser gefüllt ist, angeordnet zu werden und einen Auffangfilter zum Aufnehmen von gefrorenem Schlamm aufweist, und Mittel zum Auftauen des gefrorenen Schlamms in dem Behälter aufweist.

11. Vorrichtung nach Anspruch 10, wobei die Mittel zum Aufnehmen von gefrorenem Schlamm ein Gitter (21) sind, das in dem Behälter (3) angeordnet ist.

12. Vorrichtung nach Anspruch 10 oder 11, wobei der Behälter (3) einen Auslass (12) aufweist, der angeordnet ist, um Wasser von dem Boden des Behälters (3) abzuleiten.

13. Vorrichtung nach einem der Ansprüche 10-12, die einen Lufteinlass/-Auslass (13) zum Einlassen/Auslassen von Luft aus dem Behälter (3) aufweist.

14. Vorrichtung nach einem der Ansprüche 10-13, die eine Steuereinheit (15) für die Steuerung von Heizelementen (11) in den Wänden (20) des Behälters (3) aufweist.

15. Vorrichtung nach einem der Ansprüche 10-14, wobei die kühlbare Fläche im Wesentlichen flach ist.

16. Vorrichtung nach einem der Ansprüche 10-15, wobei der Auffangfilter ein Gitter (21), das zum Auffangen größerer Objekte angeordnet ist und einen Partikelfilter (10), der unter dem Gitter (21) zum Auffangen kleiner Partikel in dem Schlamm angeordnet ist, aufweist.

## Revendications

1. Procédé de manipulation de boues disposées sur le fond (2) d'un bassin (1) rempli d'eau, l'eau définissant une surface, **caractérisé en ce qu'**il comprend les étapes consistant à :
congeler les boues dans une partie du fond (2) du bassin (1),
disposer un récipient (3) pouvant être fermé dans le bassin (1) au-dessous de la surface de l'eau, lequel récipient (3) comprend un filtre collecteur,
déplacer les boues congelées dans le récipient (3) jusqu'à une position au-dessus du filtre collecteur,
fermer le récipient (3), et
faire dégeler les boues congelées dans le récipient (3) .

2. Procédé selon la revendication 1, dans lequel la congélation des boues comprend les étapes consistant à :
agencer un dispositif de congélation (4), comportant une surface (19) essentiellement plate et pouvant être refroidie, la surface plate (19) étant à une certaine distance du fond (2) du bassin (1) rempli d'eau, essentiellement au-dessus de la surface supérieure des boues,
refroidir la surface (19) pouvant être refroidie du dispositif de congélation (4) à une température suffisamment basse pour que les boues gèlent et
maintenir la basse température pendant une période suffisamment longue pour que pratiquement toutes les boues entre le dispositif de congélation (4) et le fond (2) gèlent.

3. Procédé selon la revendication 2, dans lequel l'étape de déplacement des boues congelées dans le récipient (3) comprend les étapes consistant à :
après congélation des boues, déplacer le dispositif de congélation (4) du fond du bassin (1) au récipient (3) et
faire passer les boues congelées du dispositif de congélation (4) dans le récipient (3).

4. Procédé selon la revendication 3, dans lequel la surface (19) pouvant être refroidie du dispositif de congélation (4) est une surface (19) pouvant être refroidie/chauffée qui est aussi agencée pour pouvoir être chauffée, et
dans lequel la libération des boues du dispositif de congélation (4) comprend l'étape consistant à chauffer la surface (19) pouvant être refroidie/chauffée.

5. Procédé selon l'une quelconque des revendications précédentes, dans lequel le récipient (3) est agencé avec des moyens pour chauffer les parois (20) et
dans lequel le dégel des boues congelées comprend l'étape consistant à chauffer les parois (20) du récipient (3).

6. Procédé selon l'une quelconque des revendications précédentes, comprenant l'étape consistant à retirer l'essentiel de l'eau du récipient (3) avant de faire dégeler les boues congelées.

7. Procédé selon la revendication 6, dans lequel l'eau est évacuée pendant le dégel des boues afin de maintenir un environnement essentiellement sec dans le récipient (3).

8. Procédé selon la revendication 7, dans lequel on fait circuler de l'air sec à travers le récipient (3) pendant le dégel des boues.

9. Procédé selon l'une quelconque des revendications précédentes, dans lequel les boues congelées sont disposées sur le filtre collecteur.

10. Appareil de manipulation de boues, comprenant un récipient (3) ayant une ouverture (8) et un couvercle (9) à mettre en place dans l'ouverture (8) pour fermer le récipient (3),
**caractérisé en ce qu'**il comprend au moins un dispositif de congélation (4) mobile pour congeler des boues disposées sur le fond (2) d'un bassin rempli d'eau, lequel dispositif de congélation (4) comporte une surface (19) pouvant être refroidie et
**en ce que** le récipient (3) est agencé pour être placé sur le fond (2) du bassin rempli d'eau et comprend un filtre collecteur pour recevoir les boues congelées et des moyens pour faire dégeler les boues congelées dans le récipient.

11. Appareil selon la revendication 10, dans lequel le moyen pour recevoir les boues congelées est une grille (21) disposée dans le récipient (3).

12. Appareil selon la revendication 10 ou 11, dans lequel le récipient (3) comprend une sortie (12) agencée pour vider l'eau du fond du récipient (3).

13. Appareil selon l'une quelconque des revendications 10 à 12, comprenant une entrée/sortie (13) d'air pour que l'air entre/sorte du récipient (3).

14. Appareil selon l'une quelconque des revendications 10 à 13, comprenant une unité de commande (15) pour commander des éléments chauffants (11) dans les parois (20) du récipient (3).

15. Appareil selon l'une quelconque des revendications 10 à 14, dans lequel la surface pouvant être refroidie est essentiellement plate.

16. Appareil selon l'une quelconque des revendications 10 à 15, dans lequel le filtre collecteur comprend une grille (21) conçue pour recueillir les plus grands objets et un filtre à particules (10) disposé sous la grille (21) pour recueillir les petites particules dans les boues.
